# EUROPEAN PATENT APPLICATION

(11) **EP 3 553 701 A1**
(43) Date of publication of application: **16.10.2019**
(21) Application number: 18166623.1
(22) Date of filing: 10.04.2018
(51) Int. Cl.: G06K 9/20

(54) **METHOD FOR MEASURING A GROWTH PROCESS OF A FRUIT, AND A TAG TO BE APPLIED ONTO A FRUIT TO MEASURE A FRUIT GROWTH PROCESS**

(71) Applicant: Robert Bosch GmbH, 70442 Stuttgart (DE)
(72) Inventor: Sciusco, Adriano, CAP 70122 Palese (Bari) (IT); De Carlo, Pietro, 70020 Bitritto (Ba) (IT)

(57) **Abstract**

The invention deals with a method (100) for measuring a growth process of a fruit (250) comprising the following steps: applying (110) a tag (200) onto the fruit (250); and taking (120) at least two pictures, wherein each picture shows at least part of the fruit (250) and at least part of the tag (200).

## Description

The present invention relates to a method for measuring a growth process of a fruit, a tag to be applied onto a fruit to measure a fruit growth process, a computer program, a machine-readable storage medium and an electronic control device.

### BACKGROUND INFORMATION

It is known in the prior art, that the growth of a fruit may be controlled manually using calipers or other mechanical size measuring devices. According to the scientific paper by M. Regunathan and W. S. Lee, "Citrus fruit identi□cation and size determination using machine vision and ultrasonic sensors," in ASABE Annual International Meeting, 2005, Paper Number 053017, a machine vision and image processing method is known which identifies citrus fruits and determines the size of the identified fruits.

### Disclosure of the invention

The method is directed to a method for measuring a growth process of a fruit.

A fruit according to the present invention is understood to be the seed-bearing structure in flowering plants, also known as angiosperms, formed from the ovary after flowering. A fruit in this sense should also comprise tomatoes, nuts and other plants, which grow on acres, fields or land and whose size growth can be measured.

In the first step of the method, a tag is applied onto the fruit. Preferably, the tag is applied when the fruit is relatively small. The tag may be applied onto the fruit using an adhesive label. Alternatively, a glue may be used.

In a second step of the method, at least two pictures are taken. Here, each picture shows at least part of the fruit and at least part of the tag.

The method has the advantage that measuring the growth process of a fruit is automated in real time.

According to a preferred embodiment, the tag comprises a nondeformable part having an identifier to identify the fruit. Preferably, the nondeformable part has a predetermined dimension, e.g. a size, a length and / or a width. This feature has the advantage, that the size of the fruit can be compared to the predetermined dimension, thus the absolute size of the fruit can be determined. Another advantage is that the method may be executed for a plurality of different fruits simultaneously, because the different fruits may be identified by the identifier. The identifier may comprise a number, e.g. a serial number or QR code, which is machine-readable. Preferably, the nondeformable part comprises a colored part. This has the advantage, that the nondeformable part may be detected more easily using machine reading.

According to another preferred embodiment, the tag comprises a deformable part having a machine-readable pattern. This feature has the advantage that the deformable part, which is applied onto the surface of the fruit, deforms according to the growth of the fruit on the surface of the fruit. By acquiring pictures of the temporal development of the pattern, it is possible to determine the growth process of the fruit as a function of this is done wire computer vision.

Preferably, the nondeformable part and the deformable part are manufactured as a single piece. This has the advantage that the process of manufacturing is easy.

According to a preferred embodiment, the pattern comprises concentric circles. Preferably, the concentric circles are radially equidistant. This feature has the advantage, that the pattern has a simple shape and that the growth of a fruit onto which the pattern is applied can be easily detected.

According to a preferred embodiment, the method further comprises determining a fruit growth as a function of time by determining a change of deformation of at least part of the tag. Preferably, this is done by determining a change of the deformable part of the tag in the at least two pictures. Determining the change of the deformable part of the tag is done by using a computer vision technique. This feature has the advantage that the fruit growth can be monitored in real time and the measured fruit growth can be shared online in real time.

According to a preferred embodiment, the method further comprises correlating the determined fruit growth to at least one of a climatic change, and weather data. The determined correlation helps in optimizing the growth of the grown plants. Knowing this correlation helps maximizing the yield of the grown fruits and finding the most suitable area to grow such fruits.

According to a preferred embodiment, the method further comprises sending one picture of the at least two pictures to a receiver via an Internet connection after each time a picture is taken. Alternatively or additionally to the Internet connection, the picture may be sent via a radio communication or any communication using electromagnetic waves. This feature has the advantage, that the data of the fruit growth is available on the Internet in real time.

Preferably, each picture shows the whole deformable part of the tag on the fruit. Preferably, each picture shows the whole tag on the fruit. This feature has the advantage that the deformable part of the tag or the whole tag can be used to determine the growth of the fruit. This makes the determination of the fruit growth more accurate. Preferably, each picture shows a side view of the whole fruit. Preferably, a plurality of pictures is taken. These features help in increasing the accuracy of the method.

According to a preferred embodiment, the time when a predetermined picture is taken and the time when the following picture is taken is a predetermined time difference. This predetermined time difference is preferably the same for all pictures. The pictures are e.g. taken every day at the same time or every week at the same time. According to another preferred embodiment, pictures are taken at times, which have the same lighting conditions. This feature has the advantage that the process of taking picture is automated and easy. This feature also simplifies the analysis or evaluation of the pictures.

The tag is to be applied onto a fruit to measure a fruit growth process. The tag comprises a nondeformable part having an identifier to identify the fruit, and a deformable part having a machine-readable pattern. The tag has the advantage that a growth of a fruit can be measured in real time.

The computer program is configured to carry out each step of the method, in particular when it runs on an electronic control unit or a computer. This allows the implementation of the method on a common control unit without having to modify the control unit. In order to do that the computer program is stored on machine-readable storage medium. By deploying the computer program onto a conventional electronic control unit, one obtains the electronic control unit, which is configured to measure a growth process of a fruit using the method.

Further advantages and embodiments of the invention will become apparent from the description and the appended drawings.

It shall be understood that the features mentioned above and those which are still to be explained below can be used not only in the particular combination indicated but also in other combinations or in a single setting without departing from the scope of the present invention.

### BRIEF DESCRIPTION OF THE DRAWINGS

Exemplifying embodiments of the present invention are depicted in the drawings and will be explained in further detail below.
Figure 1 shows a tag, which is applied onto a fruit to measure a fruit growth process according to an embodiment of the present invention.
Figures 2A and 2B show an undeformed and a deformed tag, respectively, according to embodiments of the present invention.
Figure 3 illustrates a method for measuring a growth process of a fruit according to an embodiment of the present invention.
Figure 4 shows a flow diagram of a method according to an embodiment of the present invention.

### DETAILED DESCRIPTION OF EXAMPLE EMBODIMENTS

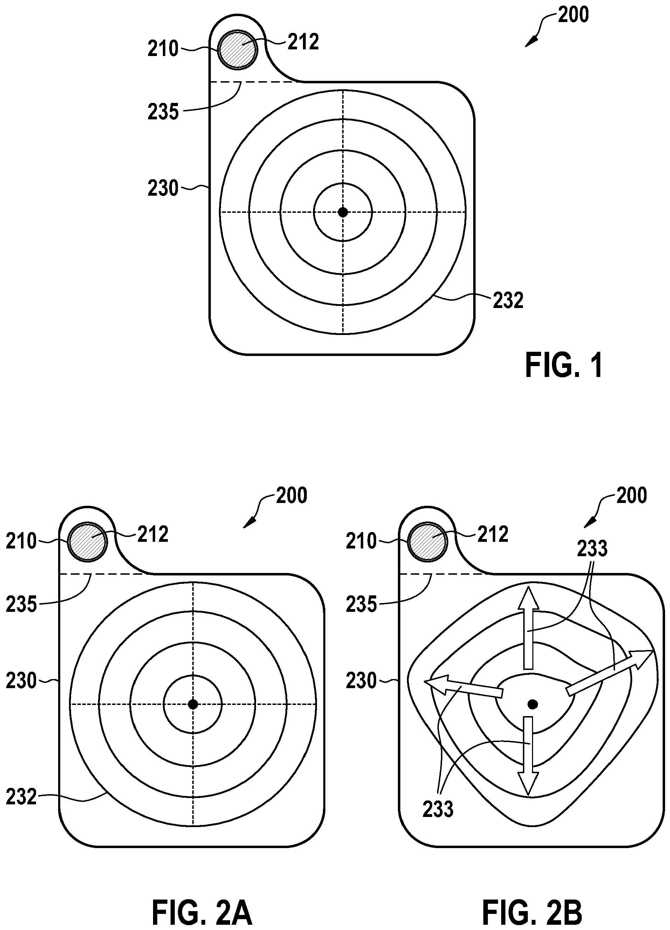

Figure 1 shows a tag 200, which comprises a nondeformable part 210 and a deformable part 230. The tag 200 is applied onto a fruit. The nondeformable part 210 comprises an identifier 212 to identify the fruit onto which the tag 200 is applied. The nondeformable part 210 is colored. The deformable part 230 has a machine-readable pattern 232, which the present case comprises equidistant concentric circles. The nondeformable part 210 and the deformable part 213 are manufactured as a single piece. The nondeformable part 210 can be separated from the deformable part 230 at a cutting line 235.

Figure 2A shows the same tag 200 as shown in figure 1. The tag 200, as shown in figure 2A is not deformed nor distorted. The tag 200, as shown in figure 2B is deformed. One can see in figure 2B, that the deformable part 230, in particular the pattern 232 comprising the equidistant concentric circles, are deformed by the growth of the fruit along a plurality of arrows 233.

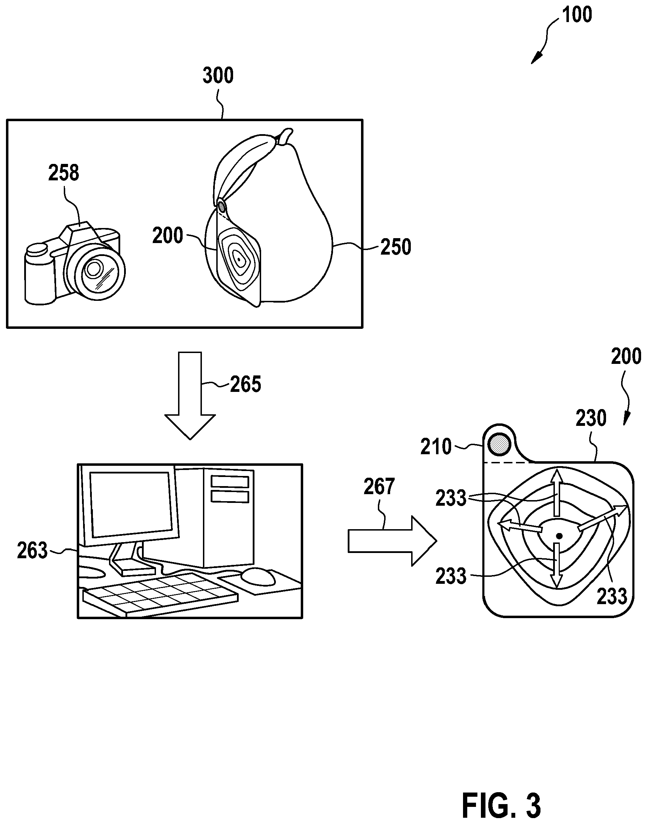

Figure 3 illustrates a method 100 according to an embodiment of the present invention. In the upper area of figure 3, one can see a fruit 250, in fact, a pear, onto which tag 200 has been applied and which in figure 3 is in a distorted or deformed state. In frame 300, one can also see that pictures of the fruit 250 with the deformed tag 200 taken by a camera 258.

The pictures taken by the camera 258 are then sent to a computer 263 as indicated by the arrow 265. The pictures are sent to the computer 263 using a Wi-Fi connection. In a next step, which is indicated by arrow 267, the computer 263 calculates the growth, in particular the growth directions, as indicated by the arrows 233. The result of this computation can be shared via the Internet.

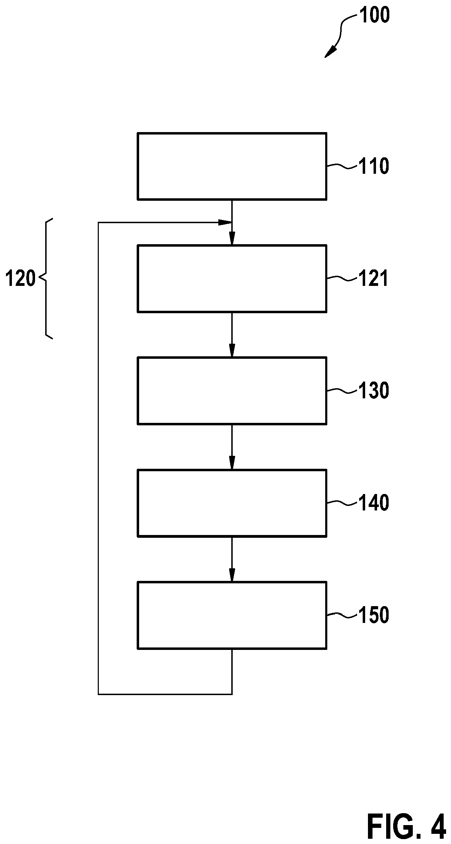

Figure 4 shows a flow diagram of a method 100 according to an embodiment of the present invention. The method 100 starts with a first step 110, in which tag 200 is applied onto the fruit 250.

In a next step 121, a picture of the fruit 250 and the tag 200 is taken.

In the following step 130, the picture is sent via an Internet connection to a receiver.

In the following step 140, a fruit growth, in particular the extent of the growth and the growth directions, is determined as a function of time by determining a change or deformation of the deformable part 230 of the tag 200. This is done by the computer vision method.

In the following step 150, the determined fruit growth is correlated to the climatic change and weather data of the region where the fruit is grown.

After step 150, the method continues with the above-mentioned step 121, thereby repeating the above-mentioned steps. Reference numeral 120 refers to taking at least two pictures while reference numeral 120 refers to taking one picture.

## Claims

1. Method (100) for measuring a growth process of a fruit (250) comprising the following steps:
applying (110) a tag (200) onto the fruit (250); and
taking (120) at least two pictures, wherein each picture shows at least part of the fruit (250) and at least part of the tag (200).

2. Method (100) according claim 1, **characterized in that** the tag (200) comprises:
a nondeformable part (210) having an identifier (212) to identify the fruit (250); and
a deformable part (230) having a machine-readable pattern (232).

3. Method (100) according to the preceding claim, **characterized in that** the nondeformable part (210) has a predetermined dimension.

4. Method (100) according to claim 2 or 3, **characterized in that** the pattern (232) comprises concentric circles.

5. Method (100) according to one of the preceding claims, further comprising:
determining (140) a fruit growth as a function of time by determining a change of the deformable part (230) of the tag (200) in the at least two pictures.

6. Method (100) according to the preceding claim, further comprising:
correlating (150) the determined fruit growth to at least one of a climatic change, and weather data.

7. Method (100) according to one of the preceding claims, further comprising:
sending (130) one picture of the at least two pictures to a receiver (270) via an Internet connection (280) after each time a picture is taken.

8. Method (100) according to one of the preceding claims, **characterized in that**
each picture shows the whole tag (200).

9. Tag (200) to be applied onto a fruit (250) to measure a fruit growth process comprising:
a nondeformable part (210) having an identifier (212) to identify the fruit (250); and
a deformable part (230) having a machine-readable pattern (232).

10. Computer program, which is configured to carry out each step of a method (100) according to one of claims 1 to 8.

11. Machine-readable storage medium on which a computer program according to the preceding claim is stored.

12. Electronic control device, which is configured to measuring a growth process of a fruit (250) using a method (100) according to one of claims 1 to 8.
